# EUROPEAN PATENT SPECIFICATION

(11) **EP 0 673 575 B1**
(45) Date of publication and mention of the grant of the patent: **27.01.1999**
(21) Application number: 94900234.9
(22) Date of filing: 19.11.1993
(51) Int. Cl.: H04N 3/15

(54) **HIGHER DEFINITION VIDEO SIGNALS FROM LOWER DEFINITION SOURCES**
VIDEOSIGNALE HÖHERER AUFLÖSUNG ERZEUGT AUS QUELLEN NIEDRIGERER AUFLÖSUNG
SIGNAUX VIDEO DE HAUTE DEFINITION OBTENUS A PARTIR DE SOURCES DE BASSE DEFINITION

(30) Priority: 10.12.1992 GB 9225824
(43) Date of publication of application: 27.09.1995
(73) Proprietor: BRITISH BROADCASTING CORPORATION, London W1A 1AA (GB)
(72) Inventor: JONES, Arthur Howard, West Sussex RH13 3JP (GB)
(74) Representative: Garratt, Peter Douglas
(86) International application number: GB9302383
(87) International publication number: WO9414275

(56) References cited:
- WO-A-87/05770
- WO-A-90/02466
- WO-A-91/14338
- JP-A- 3 240 372
- US-A- 4 393 410
- US-A- 5 016 109

## Description

This invention relates to the acquisition of high definition video signals from lower definition input video signals produced either from cameras or other video signal sources.

The invention is defined in the claims to which reference should be made.

In one preferred embodiment of the invention video data is acquired by a lower definition image to be televised and stored in the higher definition store at appropriate storage locations. The camera is then panned and tilted to acquire video data from the remaining portions of the image. The data from the remaining portions is written to the store at locations appropriate to the relative position in the image of the data acquired and the data already written to the store. Movement of the camera is taken into account by deriving motion vectors from the video data.

In another preferred embodiment a plurality of low definition source cameras are used to acquire video data from the first image portion and the further image portions simultaneously. The areas of the image from which a given cameras acquires data partially overlaps the acquisition area of at least one other camera.

JP-A-3240372 discloses details of a still picture image pickup device in which a sensor is moved.

WO 87/05770 discloses techniques involving bandwidth reduction using moving sample structures.

WO 91/14338 discloses a high resolution camera formed from multiple, nonoverlapping, lower resolution cameras. This latter document corresponds to the preamble of claims 1, 9, 10 and 11.

Embodiments of the invention will now be described, by way of example, and with reference to the accompanying drawings, in which:
Figure 1 is a schematic diagram of a basic system embodying the invention;
Figure 2 is a block schematic diagram illustrating refinements to the system of Figure 1, and
Figure 3 is a schematic diagram of an alternative method of signal acquisition embodying the invention.

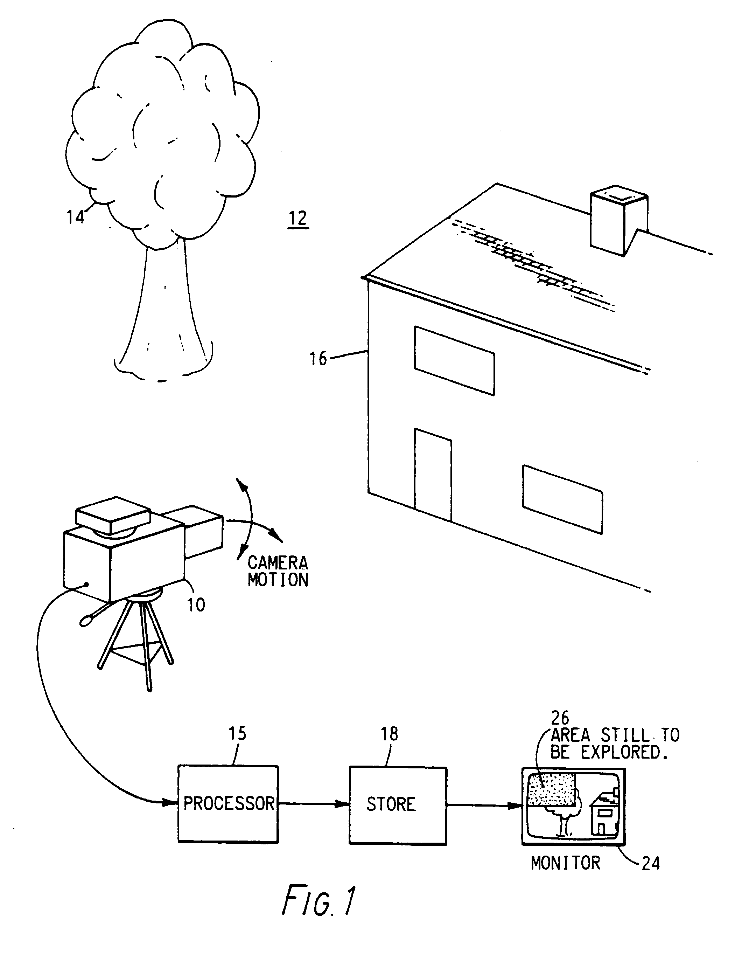

in the simple embodiment of Figure 1, a video signal source, here a television camera 10 is directed at a part of a scene or image 12 to be televised. The camera 10 is a lower definition video signal source which is to be used to obtain higher definition video signals. In Figure 1 the scene comprises house 14 and tree 16. The camera, which may be a conventional definition camera, produces, at any one time, a sub set of the pixels which make up the full high definition television (HDTV) image. This sub set of pixels represents a first portion of the image to be televised and is written into an HDTV picture store 18 at storage locations appropriate to the overall position of the image portion scanned in the picture or image to be televised. The complete set of pixels for the HDTV image is obtained by moving the video source, by panning or by movement of the camera in the X axis, and by tilting, or by movement in the Y axis, so that the scene is fully explored. The speed of movement of the camera must be sufficiently slow that sharp images are produced. This is dependent on the exposure time of the camera (some are electronically shuttered) and/or on any correction for lag effects. Movement of the video source acquires data from further image portions. These data are also stored in the higher definition store 18 at locations related to the storage locations of the first image portion in accordance with the relative -positions in the image of the first and further image portions.

To ensure that the HDTV image is correctly constructed, the pixels acquired from the panning and tilting of the camera must be entered into appropriate locations in the storage means, HDTV store 18. It is therefore necessary to know the motion of the camera. Although camera motion might be measured by a mechanical or optical device it is preferred to apply measurements directly to the signal produced by the camera using movement information derived from the video signal such as motion vectors. An example of motion vector measurement is described in GB-A-2188510 the disclosure of which is incorporated herein by reference. The technique disclosed therein is used to establish how far the information from sub sets of pixels already entered into the store 18 has moved in relation to the scanning structure. From that calculation the proper location for picture pixels newly generated can be computed. Other known techniques for motion vector measured may be used to perform this operation. Measurement of motion vectors according to the disclosure of GB-A-2188510 can produce a highly accurate result as the technique was developed to establish the relative motion of sub-blocks of a scene and is being used here to establish the global motion experienced at any one time by almost all of a still scene.

In practice, smaller areas of the picture cannot be ignored as even the best lenses cause some geometrical distortion.

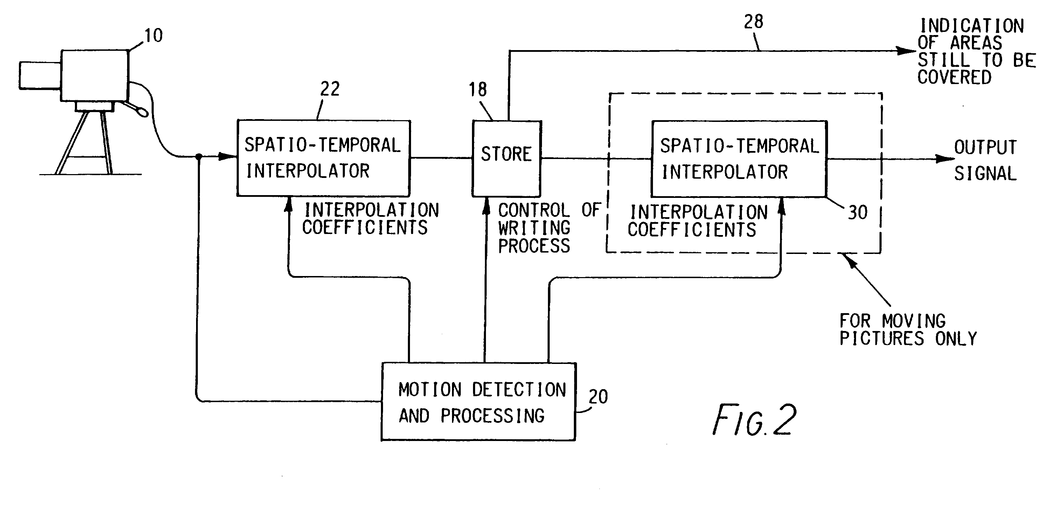

To allow for such distortions it is desirable and convenient to commence exploration of the scene with the camera directed to its centre portion. The corresponding video signal derived from that centre portion is entered directly into the corresponding part of store 18. Thereafter, as the camera moves, the derivation of other HDTV picture elements is achieved by spatial interpolation between the pixels produced by the camera under the control of the motion detector. This system is illustrated in Figure 2 in which the output of the camera 10 is passed to motion detection and processing means 20 and to spatio-temporal interpolator 22. The motion detection and processing means detects the degree of motion of the camera and derives a set of motion vectors from that detected motion. The motion vectors are used to develop a set of interpolation coefficients which are applied as a control to the interpolator 22. The interpolation performed by interpolator 22 is controlled by the coefficients derived by the motion detection and processing means 20. The interpolator 22 corresponds to the processor 15 in Figure 1. The output of interpolator 22 is written into HDTV store 18, again under control of the motion detector/processor 20. The motion detector and processor 20 can be viewed as a means for controlling the addressing of the higher definition store 18.

The signals produced by the motion detector can also be examined to determine whether, and to what degree, geometrical distortions are magnified as the camera moves from the centre to the edges of the picture. If the distortion is judged to be unacceptable, the picture could be re-interpolated or new interpolation coefficients generated such that interpolation now takes place within the central portion of the image, to correct it.

The interpolation process could also be used to give some flexibility in the relative sizes of the camera and HDTV images. The ability of the interpolator 22 to interpolate temporally arises from the camera pans and tilts, which cause each small area of the scene to be scanned many times appearing in various positions on the photosensitive surface. Temporal and spatial interpolation is therefore possible in the information to be stored in store 18. Temporal interpolation can be used to average out the effects of vignetting and other camera spatial sensitivity variations.

Spatial control of the motion of the camera is not necessary. It is possible to arrange for a display showing the parts of the image which have been covered and thus indicating the directions in which the camera still needs to be pointed to complete the scene. A display 24 is illustrated in Figure 1 and includes a portion 26 yet to be scanned. The store 18 can be loaded initially with a signal representing black to carify the indication of unscanned areas. In Figure 2 the signal to be displayed is read out directly from store 18 on line 28. The video data representing scanned image portions overwrites the black signal stored at the corresponding location in store 18.

As an alternative to the black unscanned areas of Figure 1, the circuits controlling the storage process can be designed to produce on the display a specific delineation of areas still to be covered.

The system as described so far is suitable for still scenes. Moving HDTV pictures may be produced by controlling movement of the video signal source, i.e. panning and tilting of the camera such that each part of the scene is visited in a regular sequence. Such a control may be mechanical. The output of the store 18 can then be interpolated using a further spatio-temporal interpolator 30 (Figure 2). A similar technique has been proposed to produce smooth slow motion from a sequence of conventional video images. This implementation is limited to situation where objects are moving slowly. If an object moves too quickly whilst out of sight of the camera an effect similar to the well known 'wagon wheel' effect caused by insufficient temporal sampling will occur. This problem may be alleviated by making use of the fact that when objects are within sight of the camera they are scanned temporally at normal television rate. By making more use of the motion vector information generated by motion detector/processor 20 a controlled motion extrapolation can be generated for applicaton when the camera is looking elsewhere.

The basic technique described may be used with other video signal sources such as electronic sources for building up an HDTV graphic using a low definition (conventional) graphics generator.

The system is similar to the camera example except that no interpolation is necessary and only the store writing process needs to be controlled.

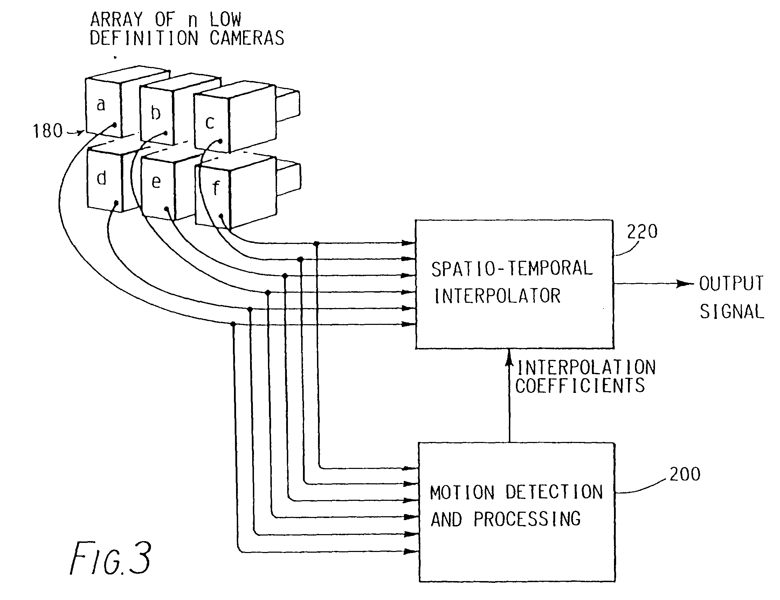

Figure 3 shows an alternative approach to application of the technique described. A number n of low definition cameras 180a...f are arranged so that their fields of view overlap and so that, between them, they cover the whole scene. The output of each camera is passed to a spatio-temporal interpolator 220 and a motion detector/processor 200 which generates interpolation coefficients to control the interpolator. Each of the interpolator 220 and the motion detector/processor 200 comprises an individual circuit for each camera. The motion detectors decide the nature of the overlaps to control the spatial interpolator to generate a complete set of HDTV pixels correcting for spatial or sensitivity incompatibilities. As all of the scene is viewed by the cameras at any one time, an array of cameras can cope with motion in the scene more readily than the single camera example described previously. Thus, video data from the first image portion and the further image portions of the previous example is acquired simultaneously by the n lower definition video sources. A store is still required as the individual cameras produce their outputs in parallel and the store enables the high definition picture elements to be sequenced according to the output standard.

## Claims

1. A method of generating a video signal at a first, higher, definition from a video signal source at a second, lower, definition comprising acquiring, video data at the second, lower definition relating to a first portion of the image to be televised *characterised in that* the method further comprises:
a) storing the acquired video data in a higher definition store (18) at locations appropriate to the position of the image portion in the image to be televised;
b) acquiring video data relating to further portions of the image (28) at the lower definition as the video signal source moves relative to the image;
c) determining the relative positions in the image of further image portions acquired and acquired video data held in the store by deriving movement information from the video data;
d) storing the further video data in the higher definition store (18) at storage locations related to the storage locations of the video data representing the first image portion in accordance with the relative positions in the image to be televised of the first portion and the further portions; and
e) reading from the higher definition store (18) video data representing the image televised at the higher definition.

2. A method according to Claim 1, wherein the first image portion includes the centre of the image to be televised.

3. A method according to Claim 1, wherein the video signal source is a camera (10).

4. A method according to Claim 1 or 2, wherein the acquisition of video data relating to the further image portions (26) comprises spatially interpolating video data from the source under the control of the derived movement information.

5. A method according to Claim 4, comprising temporally interpolating image data acquired from each image portion prior to storage in the storage means (18).

6. A method according to any preceding claim further comprising moving the video signal source.

7. A method according to claim 6, wherein the movement of the video signal source is controlled to follow a predetermined sequence and the output of the higher definition store (18) is spatially and temporally interpolated under the control of the derived movement information.

8. A method according to any preceding claim comprising writing a video signal representing black into each location of the store (18), whereby the storage of video data relating to image portions overwrites the black signal stored at the respective storage locations, and displaying the contents of the store as image data is acquired.

9. A method according to any preceding claim, comprising displaying an indication of portions of the image to be acquired (26) from which video data has not been acquired.

10. Apparatus for generating a video signal at a first, higher, definition from a video signal source at a second, lower, definition, the apparatus comprising:
a video signal source (10) for acquiring video data at the second, lower, definition relating to a portion of the image to be televised at the higher definition; and
storage means (18) for storing the acquired video data, *characterised in that the* apparatus further comprises:
means for addressing the storage means (18) to store the video data at storage locations appropriate to the position of the image portion in the image to be televised as the video signal source is moved relative to the image to acquire video data from further portions of the image;
means (20) for deriving movement information from the video data, the video data being stored in the storage means (18) under the control of the addressing means and the means (20) for deriving movement information from the video data; and
means for reading video data from the storage means (18) at the first, higher definition when the video source has been moved to acquire video data from all portions of the image (12).

11. Apparatus according to claim 10 further comprising means for moving the video signal source.

12. A method of generating a video signal at a first, higher, definition from a video signal source at a second, lower, definition comprising acquiring simultaneously video data from a plurality of portions of an image to be televised with a plurality of lower definition video signal sources (180), *characterised in that* the image portion from which video data is acquired by each source partially overlaps the image portion video data from which at least one other source acquires data, the method further comprising storing the data acquired by each source at locations in a store (18) appropriate to the position within the image from which the video data was acquired, and interpolating between the signals acquired by the video signal sources under the control of interpolation coefficients derived from movement signals indicative of movement within the image.

13. Apparatus for generating a video signal at a first, higher, definition from a video signal source at a second, lower definition comprising a plurality of video signal sources (180), each arranged to acquire data at the second, lower, definition from a respective portion of an image to be televised (12), *characterised in that* the portions of the image from which any one of the sources acquires video data partially overlap the portion from at which at least one of the remaining sources acquires video data, the apparatus further comprising storage means (18) configured to store the video data acquired by each source at storage locations appropriate to the position within the image from which the video data was acquired, means (200) for determining movement in the scene to be televised and for producing interpolation coefficients in accordance with the determined movement, and means (220) for interpolating the video data acquired by each of the plurality of sources (180) under the control of the interpolation coefficients to produce the higher definition video signal.

## Patentansprüche

1. Verfahren zum Erzeugen eines Videosignals mit einer ersten höheren Auflösung aus einer Videosignalquelle mit einer zweiten niedrigeren Auflösung, umfassend die Erfassung von Videodaten mit der zweiten niedrigeren Auflösung, die sich auf einen ersten Abschnitt des zu sendenden Bildes beziehen, dadurch gekennzeichnet, daß das Verfahren die weiteren Schritte umfaßt:
a) die erfaßten Videodaten werden in einem Speicher (18) mit höherer Auflösung an Stellen gespeichert, die der Position des Bildabschnittes in dem zu sendenden Bild angemessen sind;
b) Videodaten, die sich auf weitere Abschnitte des Bildes (28) beziehen, werden mit der niedrigeren Auflösung erfaßt, während sich die Videosignalquelle relativ zum Bild bewegt;
c) es werden die relativen Positionen in dem Bild von weiteren erfaßten Bildabschnitten und von erfaßten Videodaten, die in dem Speicher gehalten werden, bestimmt, indem Bewegungsinformation von den Videodaten abgeleitet wird;
d) die weiteren Videodaten werden in dem Speicher (18) mit höherer Auflösung an Speicherstellen, die sich auf die Speicherstellen der Videodaten, die den ersten Bildabschnitt darstellen, beziehen, in Übereinstimmung mit den relativen Positionen in dem zu sendenden Bild des ersten Abschnittes und der weiteren Abschnitte abgespeichert; und
e) aus dem Speicher (18) mit höherer Auflösung werden Videodaten gelesen, die das gesendete Bild mit der höheren Auflösung darstellen.

2. Verfahren nach Anspruch 1, bei dem der erste Bildabschnitt die Mitte des zu sendenden Bildes umfaßt.

3. Verfahren nach Anspruch 1, bei dem die Videosignalquelle eine Kamera (10) ist.

4. Verfahren nach Anspruch 1 oder 2, bei dem die Erfassung von Videodaten, die sich auf die weiteren Bildabschnitte (26) beziehen, eine räumliche Interpolation von Videodaten von der Quelle unter der Steuerung bzw. Kontrolle der abgeleiteten Bewegungsinformation umfaßt.

5. Verfahren nach Anspruch 4, das eine zeitliche Interpolation von Bilddaten, die von jedem Bildabschnitt erfaßt werden, vor einer Speicherung in dem Speichermittel (18) umfaßt.

6. Verfahren nach irgendeinem der vorhergehenden Ansprüche, das außerdem eine Bewegung der Videosignalquelle umfaßt.

7. Verfahren nach Anspruch 6, bei dem die Bewegung der Videosignalquelle gesteuert wird, um einer vorbestimmten Sequenz zu folgen, und bei dem das Ausgangssignal des Speichers (18) mit höherer Auflösung unter der Steuerung bzw. Kontrolle der abgeleiteten Bewegungsinformation räumlich und zeitlich interpoliert wird.

8. Verfahren nach irgendeinem der vorhergehenden Ansprüche, das einen Schreibvorgang eines Videosignals, das Schwarz darstellt, in jede Stelle des Speichers (18) umfaßt, wobei der Speichervorgang von Videodaten, die mit Bildabschnitten im Zusammenhang stehen, das gespeicherte schwarze Signal an den jeweiligen Speicherstellen überschreibt, sowie eine Anzeige der Inhalte des Speichers, wenn Bilddaten erfaßt werden.

9. Verfahren nach irgendeinem vorhergehenden Anspruch, das eine Anzeige eines Hinweises auf Abschnitte des zu erfassenden Bildes (26) umfaßt, von denen keine Videodaten erfaßt worden sind.

10. Vorrichtung zur Erzeugung eines Videosignals mit einer ersten höheren Auflösung aus einer Videosignalquelle mit einer zweiten niedrigeren Auflösung, welche Vorrichtung umfaßt:
eine Videosignalquelle (10) zum Erfassen von Videodaten mit der zweiten niedrigeren Auflösung, die sich auf einen Abschnitt des zu sendenden Bildes mit der höheren Auflösung beziehen; und
ein Speichermittel (18), um die erfaßten Videodaten zu speichern, dadurch gekennzeichnet, daß die Vorrichtung außerdem umfaßt:
Mittel, um das Speichermittel (18) zu adressieren, um die Videodaten an Speicherstellen zu speichern, die der Position des Bildabschnittes in dem zu sendenden Bild angemessen sind, während die Videosignalquelle relativ zu dem Bild bewegt wird, um Videodaten von weiteren Abschnitten des Bildes zu erfassen;
ein Mittel (20), um von den Videodaten Bewegungsinformation abzuleiten, wobei die Videodaten in dem Speichermittel (18) unter der Steuerung des Adressiermittels und des Mittels (20) zum Ableiten von Bewegungsinformation von den Videodaten abgespeichert werden; und
ein Mittel, um Videodaten von dem Speichermittel (18) mit der ersten höheren Auflösung zu lesen, wenn die Videoquelle bewegt worden ist, um Videodaten von allen Abschnitten des Bildes (12) zu erfassen.

11. Vorrichtung nach Anspruch 10, die außerdem ein Mittel zum Bewegen der Videosignalquelle umfaßt.

12. Verfahren zur Erzeugung eines Videosignals mit einer ersten höheren Auflösung von einer Videosignalquelle mit einer zweiten niedrigeren Auflösung, umfassend eine simultane Erfassung von Videodaten von einer Anzahl von Abschnitten eines zu sendenden Bildes mit einer Anzahl von Videosignalquellen (180) mit geringerer Auflösung, dadurch gekennzeichnet, daß der Bildabschnitt, von dem Videodaten mit Hilfe jeder Quelle erfaßt werden, teilweise mit dem Bildabschnitt überlappt, von dessen Videodaten zumindest eine andere Quelle Daten erfaßt, welches Verfahren außerdem eine Abspeicherung der mit Hilfe jeder Quelle erfaßten Daten an Stellen in einem Speicher (18), die der Position innerhalb des Bildes, von dem die Videodaten erfaßt wurden, angemessen sind, sowie eine Interpolation zwischen den mit Hilfe der Videosignalquellen erfaßten Signalen umfaßt, und zwar unter der Steuerung bzw. Kontrolle von Interpolationskoeffizienten, die von Bewegungssignalen abgeleitet werden, die auf eine Bewegung innerhalb des Bildes hinweisen.

13. Vorrichtung zur Erzeugung eines Videosignals mit einer ersten höheren Auflösung von einer Videosignalquelle mit einer zweiten niedrigeren Auflösung, umfassend eine Anzahl von Videosignalquellen (180), die jeweils ausgelegt bzw. angeordnet sind, um Daten mit der zweiten niedrigeren Auflösung von einem jeweiligen Abschnitt eines zu sendenden Bildes (12) zu erfassen, dadurch gekennzeichnet, daß die Abschnitte des Bildes, von denen irgendeine der Quellen Videodaten erfaßt, teilweise mit dem Bereich überlappen, von dem zumindest eine der verbleibenden Quellen Videodaten erfaßt, wobei die Vorrichtung außerdem ein Speichermittel (18), das ausgelegt ist, um die mit Hilfe jeder Quelle erfaßten Videodaten an Speicherstellen abzuspeichern, die der Position innerhalb des Bildes angemessen sind, von dem die Videodaten erfaßt wurden, Mittel (200) zum Bestimmen einer Bewegung in der zu sendenden Szene und zum Erzeugen von Interpolationskoeffizienten in Übereinstimmung mit der bestimmten Bewegung sowie Mittel (220) zum Interpolieren der mit jeder der Anzahl von Quellen (180) erfaßten Videodaten unter der Steuerung bzw. Kontrolle der Interpolationskoeffizienten umfaßt, um das Videosignal mit der höheren Auflösung zu erzeugen.

## Revendications

1. Un procédé pour générer un signal vidéo avec une première définition, supérieure, à partir d'une source de signal vidéo avec une seconde définition, inférieure, comprenant l'acquisition de données vidéo à la seconde définition, inférieure, concernant une première partie de l'image à téléviser, caractérisé en ce que le procédé comprend en outre les étapes suivantes :
a) on enregistre les données vidéo acquises dans une mémoire de définition supérieure (18), à des emplacements en accord avec la position de la partie d'image dans l'image à téléviser;
b) on acquiert des données vidéo concernant des parties supplémentaires de l'image (28), avec la définition inférieure, pendant que la source de signal vidéo se déplace par rapport à l'image;
c) on détermine les positions relatives dans l'image de parties d'image supplémentaires qui sont acquises et de données vidéo acquises qui sont conservées dans la mémoire, en élaborant une information de mouvement à partir des données vidéo;
d) on enregistre les données vidéo supplémentaires dans la mémoire de définition supérieure (18), à des emplacements de mémoire qui sont liés aux emplacements de mémoire des données vidéo représentant la première partie d'image, conformément aux positions relatives dans l'image à téléviser de la première partie et des parties supplémentaires; et
e) on lit dans la mémoire de définition supérieure (18) des données vidéo représentant l'image télévisée avec la définition supérieure.

2. Un procédé selon la revendication 1, dans lequel la première partie d'image comprend le centre de l'image à téléviser.

3. Un procédé selon la revendication 1, dans lequel la source de signal vidéo est une caméra (10).

4. Un procédé selon la revendication 1 ou 2, dans lequel l'acquisition de données vidéo concernant les parties d'image supplémentaires (26) comprend l'accomplissement d'une interpolation spatiale de données vidéo provenant de la source, sous la commande de l'information de mouvement qui est élaborée.

5. Un procédé selon la revendication 4, comprenant l'accomplissement d'une interpolation temporelle des données d'image qui sont acquises à partir de chaque partie d'image, avant l'enregistrement dans les moyens de mémoire (18).

6. Un procédé selon l'une quelconque des revendications précédentes, comprenant en outre l'opération qui consiste à déplacer la source de signal vidéo.

7. Un procédé selon la revendication 6, dans lequel le mouvement de la source de signal vidéo est commandé de façon à suivre une séquence prédéterminée, et l'information de sortie de la mémoire de définition supérieure (18) est interpolée de façon spatiale et temporelle, sous la commande de l'information de mouvement qui est élaborée.

8. Un procédé selon l'une quelconque des revendications précédentes, comprenant l'écriture d'un signal vidéo représentant le noir dans chaque emplacement de la mémoire (18), grâce à quoi l'enregistrement de données vidéo concernant des parties d'image écrase le signal de noir qui est enregistré aux emplacements de mémoire respectifs, et la visualisation du contenu de la mémoire au fur et à mesure que des données d'image sont acquises.

9. Un procédé selon l'une quelconque des revendications précédentes, comprenant la visualisation d'une indication de parties de l'image à acquérir (26), à partir desquelles des données vidéo n'ont pas été acquises.

10. Dispositif pour générer un signal vidéo ayant une première définition, supérieure, à partir d'une source de signal vidéo ayant une seconde définition, inférieure, le dispositif comprenant :
une source de signal vidéo (10) pour acquérir les données vidéo à la seconde définition, inférieure, concernant une partie de l'image à téléviser à la définition supérieure; et
des moyens de mémoire (18) pour enregistrer les données vidéo acquises, caractérisé en ce que le dispositif comprend en outre :
des moyens pour adresser les moyens de mémoire (18), de façon à enregistrer les données vidéo à des emplacements de mémoire en accord avec la position de la partie d'image dans l'image à téléviser, pendant que la source de signal vidéo est déplacée par rapport à l'image, pour acquérir des données vidéo à partir de parties supplémentaires de l'image;
des moyens (20) pour élaborer une information de mouvement à partir des données vidéo, les données de mouvement étant enregistrées dans les moyens de mémoire (18) sous la commande des moyens d'adressage et des moyens (20) pour élaborer une information de mouvement à partir des données vidéo; et
des moyens pour lire des données vidéo dans les moyens de mémoire (18) à la première définition, supérieure, lorsque la source vidéo a été déplacée de façon à acquérir des données vidéo à partir de toutes les parties de l'image (12).

11. Dispositif selon la revendication 10, comprenant en outre des moyens pour déplacer la source de signal vidéo.

12. Un procédé pour générer un signal vidéo ayant une première définition, supérieure, à partir d'une source de signal vidéo ayant une seconde définition, inférieure, comprenant l'acquisition simultanée de données vidéo provenant d'un ensemble de parties d'une image à téléviser, avec un ensemble de sources de signal vidéo (180) de définition inférieure, caractérisé en ce que la partie d'image à partir de laquelle des données vidéo sont acquises par chaque source chevauche la partie d'image à partir de laquelle au moins une source acquiert des données, le procédé comprenant en outre l'enregistrement des données acquises par chaque source à des emplacements dans une mémoire (18) en accord avec la position dans l'image à partir de laquelle les données vidéo ont été acquises, et l'interpolation entre les signaux qui sont acquis par les sources de signal vidéo, sous la commande de coefficients d'interpolation qui sont élaborés à partir de signaux de mouvement indiquant le mouvement dans l'image.

13. Dispositif pour générer un signal vidéo ayant une première définition, supérieure, à partir d'une source de signal vidéo ayant une seconde définition, inférieure, comprenant un ensemble de sources de signal vidéo (180), chacune d'elles étant conçue pour acquérir des données à la seconde définition, inférieure, à partir d'une partie respective d'une image à téléviser (12), caractérisé en ce que les parties de l'image à partir desquelles l'une quelconque des sources acquiert des données vidéo chevauchent la partie à partir de laquelle l'une au moins des sources restantes acquiert des données vidéo, l'appareil comprenant en outre des moyens de mémoire (18) ayant une configuration prévue pour enregistrer les données vidéo acquises par chaque source à des emplacement d'enregistrement en accord avec la position dans l'image à partir de laquelle les données vidéo ont été acquises, des moyens (200) pour déterminer le mouvement dans la scène à téléviser, et pour produire des coefficients d'interpolation en accord avec le mouvement déterminé, et des moyens (220) pour interpoler les données vidéo qui sont acquises par chaque source de l'ensemble de sources (180), sous la commande des coefficients d'interpolation, pour produire le signal vidéo de définition supérieure.
